# EUROPEAN PATENT APPLICATION

(11) **EP 4 517 530 A1**
(43) Date of publication of application: **05.03.2025**
(21) Application number: 24196743.9
(22) Date of filing: 27.08.2024
(51) Int. Cl.: G06F 11/07, G06F 21/56

(54) **MANAGEMENT APPARATUS, SYSTEM, AND METHOD**

(30) Priority: 01.09.2023 JP 2023142032
(71) Applicant: CANON KABUSHIKI KAISHA, Tokyo 146-8501 (JP)
(72) Inventor: TAMAGAWA, Kei, Tokyo, 146-8501 (JP)
(74) Representative: Canon Europe Limited

(57) **Abstract**

A management apparatus that communicates with an inspection apparatus configured to inspect whether input information input from a terminal is abnormal information and manages the input information includes: an inspection unit configured to generate an inspection result for the input information, a determination unit configured to, in a case where the inspection result is a result of a type that cannot be expected to be recovered over time, determine that subsequent processing for the input information is temporary invalidation processing and, in a case where the inspection result is a result of a type that can be expected to be recovered over time, determine that the subsequent processing for the input information is re-inspection determination processing.

## Description

### FIELD OF THE INVENTION

The present invention relates to a management apparatus, a system, and a method.

### BACKGROUND OF THE INVENTION

### Description of the Related Art

In recent years, storage services that store files uploaded by users and provide the files to the users in response to their requests have become more common. Some storage services have a function of sharing a file with other users, and a user can transmit or share his/her file with another user using the function. Thus, if an uploaded file is an abnormal file infected with a virus, the infection will spread via the storage service. In order to prevent such secondary damage from spreading, virus countermeasures are increasingly important for storage services.

Virus scanning service companies offer scanning services available for storage services. One form of the scanning services is to execute scanning software on a server installed in a cloud of the storage service and scan a file uploaded by a user with the scanning software in the server. In this form, the scanning software is included in the cloud, so the storage service is not required to communicate with the scanning service. This form of the scanning service is referred to as an offline type. Another form is to incorporate a module provided by the scanning service into the cloud, and the module provides a scanning function by communicating with the scanning service. This form of the scanning service is referred to as an online type. Further, the online type can be broadly classified into two types based on methods employed: one in which the scanning service provides the scanning function and the other in which the scanning service provides a pattern file update function. The former is referred to as a scanning function provision type and the latter is referred to as a pattern file update function provision type.

In the case of the scanning function provision type, the virus scanning service company provides the storage service company with the scanning service and a function of calling the service (scanning service calling function). The storage service company can use the scanning function by incorporating the scanning service calling function into the storage service. On the other hand, in the case of the pattern file update function provision type, the virus scanning service company provides the storage service company with a pattern file management service and a function of calling the service (pattern file update calling function). The storage service company can use the scanning function with a latest pattern file by incorporating the pattern file update calling function into the storage service.

The online type scanning service operates on a cloud service provided by a cloud service platform provider. Cloud services tend to be generally recognized as having high availability, but tracing back past failure histories, it can be confirmed that they have been stopped with a certain frequency. In other words, if the cloud service stops, the online type scanning service may not be able to be provided.

The storage service has a mechanism that enables a user to access an uploaded file and, if a file is uploaded, generates summary information about the file and presents it to the user. The summary information is a file attribute such as a file name and an alias or a proxy file generated from the file. In a case of an image file, a thumbnail image file corresponds to the summary information. A user can access the file via the presented summary information. Methods for providing files to users are broadly classified into two types. One is a method for scanning an uploaded file, generating summary information, and then providing the summary information. The other is a method for generating summary information and then deleting the file if it is an abnormal file. In a case of the former method, if a scanning error occurs, a user will not be able to access the file. On the other hand, in a case of the latter method, a user can access an unscanned file, and if the file is an abnormal file, the abnormal file may be unintentionally spread to other users.

Some scanning services provide error codes as a method for externally observing a status of the scanning service. Depending on an error content, there are some errors that can be expected to be recovered over time. By executing appropriate processing for an error that can be expected to be recovered over time, it is possible to provide a user with an opportunity to access the file.

A technique for executing processing according to a scan result, that is, an inspection result, is discussed in Japanese Patent Application Laid-Open No. 2012-181878. According to the technique discussed in Japanese Patent Application Laid-Open No. 2012-181878, if a file is determined to be an abnormal file as a result of inspection, access from a user is prohibited.

Further, a technique for executing processing in response to an error is discussed in Japanese Patent Application Laid-Open No. 06-305204. According to the technique discussed in Japanese Patent Application Laid-Open No. 06-305204, in a case of a communication error, a corresponding interface (I/F) is stopped, and in a case of other errors, all I/Fs are stopped.

However, the technique discussed in Japanese Patent Application Laid-Open No. 2012-181878 is to simply permit a user to access a file if it is a normal file and prohibits access to a file if it is determined to be an abnormal file, and there is no disclosure or suggestion that takes into account a case of a scanning error. Thus, if a scanning error occurs, a user may be unable to access the file or unintentionally spread the abnormal file as described above.

According to the technique discussed in Japanese Patent Application Laid-Open No. 06-305204, in a case of a communication error, communication of the I/F is stopped, so that communication between the storage service and the scanning service is stopped if an error occurs in the scanning service. Further, in a case of an error other than the communication error, all I/F is stopped, so that a user is not only unable to access the abnormal file, but also unable to view a normal file.

The present invention is directed to the provision of a management apparatus, a system, a method, and a program that can increase a possibility that a user can use a file even when a scanning error occurs in order to solve the above-described issue.

### SUMMARY OF THE INVENTION

According to a first aspect of the present invention, there is provided a management apparatus as specified in claims 1 to 7. According to a second aspect of the present invention, there is provided a method as specified in claim 8. According to a third aspect of the present invention, there is provided a program as specified in claim 9. According to a fourth aspect of the present invention, there is provided a computer-readable carrier as specified in claim 10.

Further features of the present invention will become apparent from the following description of embodiments with reference to the attached drawings.

### BRIEF DESCRIPTION OF THE DRAWINGS

Fig. 1 is a diagram showing an example of a management system.
Fig. 2 is a diagram illustrating an example of a system configuration of the management system.
Fig. 3 is a diagram illustrating an example of a hardware configuration of an information processing apparatus.
Fig. 4 is a diagram illustrating an example of a logical configuration of the management system.
Fig. 5 is a diagram illustrating an example of a processing flow in the management system.
Fig. 6 is a diagram illustrating an example of a processing flow in the management system.
Fig. 7 is a diagram illustrating an example of a processing flow in the management system.
Figs. 8A to 8D illustrate examples of tables.
Fig. 9 is a diagram illustrating an example of a re-inspection instruction screen.
Figs. 10A and 10B are graphs illustrating examples of load test results.

### DESCRIPTION OF THE EMBODIMENTS

Various embodiments of the present invention will be described in detail below with reference to the attached drawings. Configurations described in the following embodiments are merely examples, and the present invention is not limited to the illustrated configurations.

A first embodiment of the present invention is described below.

### <Concept of Management System 100>

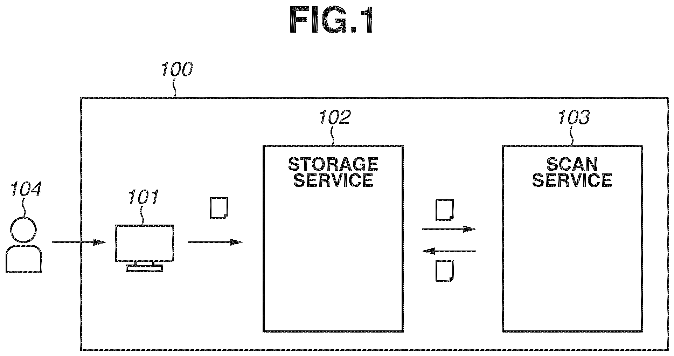

Fig. 1 is a conceptual diagram illustrating a management system 100 according to the present embodiment of the present invention.

As illustrated in Fig. 1, the management system 100 includes a personal computer (hereinbelow, referred to as PC) 101, a storage service 102, and a scan service 103.

A user 104 operates the PC 101 to use the management system 100. The user 104 has an account with the storage service 102.

The PC 101 has a communication function and can transmit a file to the storage service 102. The file is input information for the storage service 102.

The storage service 102 has a communication function and can communicate with external devices such as the PC 101 and the scan service 103. The storage service 102 manages a file uploaded by the user 104 from the PC 101. The storage service 102 accepts any type of file including a document file, an image file, a moving image file, an audio file, and an executable file.

The scan service 103 has a communication function and can communicate with the storage service 102.

A flow of the management system 100 according to the present embodiment will be described below.

The user 104 transmits a file stored in the PC 101 to the storage service 102.

The storage service 102 transfers the received file to the scan service 103 and requests inspection of the file.

The scan service 103 inspects the received file and transmits an inspection result to the storage service 102.

The storage service 102 receives the inspection result and, if the inspection result is normal, generates summary information of the file so that the user 104 can handle the file via the summary information. On the other hand, if the inspection result is abnormal, the storage service 102 moves the file to a storage for isolation.

An overview of the management system 100 according to the present embodiment is described above.

### <System Configuration of Management System 100>

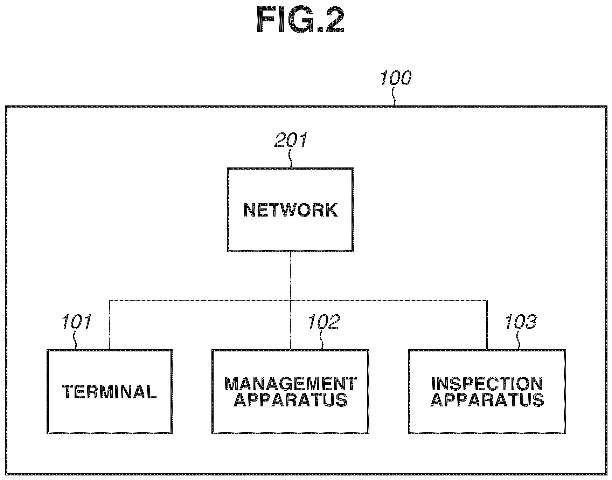

Fig. 2 illustrates a system configuration of the management system 100 according to the embodiment of the present invention.

As illustrated in Fig. 2, the management system 100 includes a terminal 101, a management apparatus 102, an inspection apparatus 103, and a network 201. The terminal 101, the management apparatus 102, and the inspection apparatus 103 respectively correspond to the PC 101, the storage service 102, and the scan service 103 in Fig. 1.

The terminal 101, the management apparatus 102, and the inspection apparatus 103 are connected to each other via the network 201. The network 201 is implemented, for example, by a local area network (LAN) or the Internet and enables intercommunication between connected devices. The terminal 101 is described as a PC having a communication function, but is not limited to this. The terminal 101 may be any terminal capable of transmitting a file to a management apparatus such as an interchangeable lens digital camera, a compact digital camera, a smartphone, and a tablet, having a communication function.

### <Hardware Configuration of Information Processing Apparatus 300>

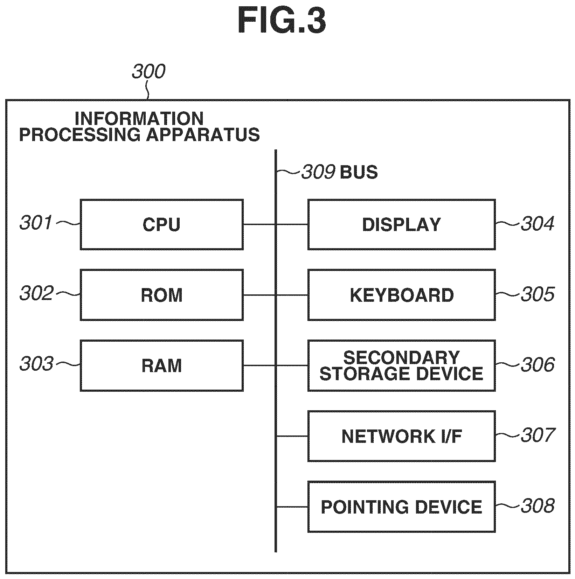

Fig. 3 illustrates an example of a hardware configuration of an information processing apparatus 300 that functions as the terminal 101, the management apparatus 102, and the inspection apparatus 103. The information processing apparatus 300 includes a central processing unit (CPU) 301, a read-only memory (ROM) 302, a random access memory (RAM) 303, a display 304, a keyboard 305, a secondary storage device 306, a network interface (I/F) 307, and a pointing device 308, and these units are connected with each other via a bus 309.

The CPU 301 is an arithmetic processing apparatus that executes a program stored in the ROM 302 or the secondary storage device 306 and controls each unit connected via the bus 309. The ROM 302 is a read-only memory that stores an operating system (OS) and the like. The RAM 303 is a memory that temporarily stores data used by the CPU 301 to execute arithmetic processing. The display 304 is a display apparatus that displays a user interface (UI) screen and the like. The keyboard 305 and the pointing device 308 are input devices that are used by a user to perform various input operations. The secondary storage device 306 stores various programs, setting data, a database (DB), captured image data, and the like. The network I/F 307 is an interface for connecting to networks such as the LAN, an intranet, and the Internet.

### <Logical Configuration of Management System 100>

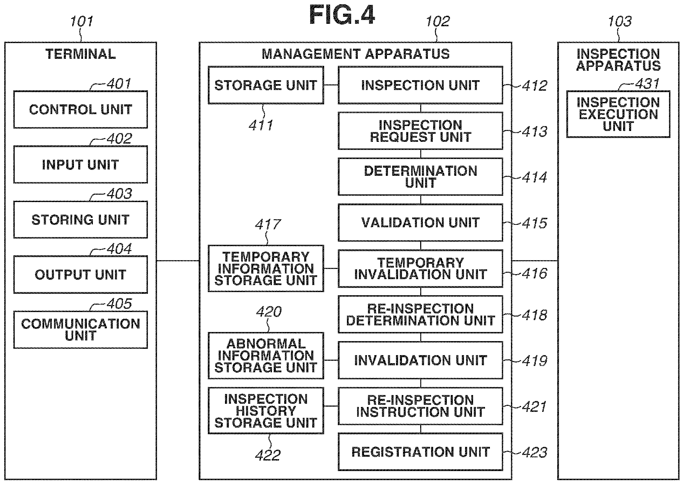

Next, a logical configuration of the management system 100 according to the present embodiment will be described with reference to Fig. 4. The terminal 101 is a general PC, a smartphone, a tablet, or the like, so that the description thereof will be omitted.

### < <Logical Configuration of Terminal 101>>

In the terminal 101, the CPU 301 loads a program stored in the ROM 302 into the RAM 303 and executes processing according to a sequence diagram and a flowchart, which are described below, so that the logical configuration of the terminal 101 is realized. Then, an execution result of each processing is stored in the RAM 303.

The terminal 101 includes a control unit 401, an input unit 402, a storing unit 403, an output unit 404, and a communication unit 405. Each functional unit will be described below.

The control unit 401 controls each component of the terminal 101.

The input unit 402 receives an input from a user.

The storing unit 403 stores a program for transmitting a file to the management apparatus 102, a file to be transmitted to the management apparatus 102, the input from the user, and the like.

An output unit 404 is a display unit that displays an input screen for the program for transmitting a file to the management apparatus 102, a transmission result, the summary information of the files on the management apparatus 102, and the like.

The communication unit 405 communicates with the management apparatus 102 via the program for transmitting a file to the management apparatus 102. The communication unit 405 transmits a file specified by the user, receives list information about files managed by the management apparatus 102, transmits an operation performed on the file managed by the management apparatus 102, and receives an operation result.

### <<Logical Configuration of Management Apparatus 102>>

In the management apparatus 102, the CPU 301 loads a program stored in the ROM 302 into the RAM 303 and executes processing according to the sequence diagram and the flowchart, which will be described below, so that the logical configuration of the management apparatus 102 is achieved. Then, an execution result of each processing is stored in the RAM 303.

The management apparatus 102 includes a storage unit 411, an inspection unit 412, an inspection request unit 413, a determination unit 414, a validation unit 415, a temporary invalidation unit 416, a temporary information storage unit 417, a re-inspection determination unit 418, an invalidation unit 419, an abnormal information storage unit 420, a re-inspection instruction unit 421, an inspection history storage unit 422, and a registration unit 423. Each functional unit will be described below.

The storage unit 411 stores a file received from the terminal 101. If the storage unit 411 executes storage, it issues an event triggered by the storage executed. A processing block that is set to receive event issuance can receive event notification if an event is issued.

The inspection unit 412 requests the inspection request unit 413 to inspect the received file and generates an inspection result from a request result.

The inspection request unit 413 requests the inspection apparatus 103 to inspect the file and returns the request result to the inspection unit 412.

The determination unit 414 determines subsequent processing based on the inspection result.

The validation unit 415 validates the file.

The temporary invalidation unit 416 makes the file temporarily unavailable.

The temporary information storage unit 417 stores a temporarily invalidated file.

The re-inspection determination unit 418 determines whether to re-inspect the file.

The invalidation unit 419 invalidates the file.

The abnormal information storage unit 420 stores an abnormal file.

The re-inspection instruction unit 421 receives a re-inspection instruction.

The inspection history storage unit 422 stores an inspection execution history.

The registration unit 423 registers the file in the management apparatus 102.

### <<Logical Configuration of Inspection Apparatus 103>>

In the inspection apparatus 103, the CPU 301 loads a program stored in the ROM 302 into the RAM 303 and executes processing according to the sequence diagram and the flowchart, which are described below, so that the logical configuration of the inspection apparatus 103 is realized. Then, an execution result of each processing is stored in the RAM 303.

The inspection apparatus 103 includes an inspection execution unit 431.

The inspection execution unit 431 receives a file inspection request from the management apparatus 102 and executes inspection on the file.

Each functional unit included in the terminal 101, the management apparatus 102, and the inspection apparatus 103 may be distributed among and implemented by a plurality of terminals or information processing apparatuses. In a case where the functions are distributed among a plurality of information processing apparatuses, the information processing apparatuses are connected with the LAN or the like to be able to communicate with each other and cooperate to perform a series of processing described below.

### <Sequence of Management System 100>

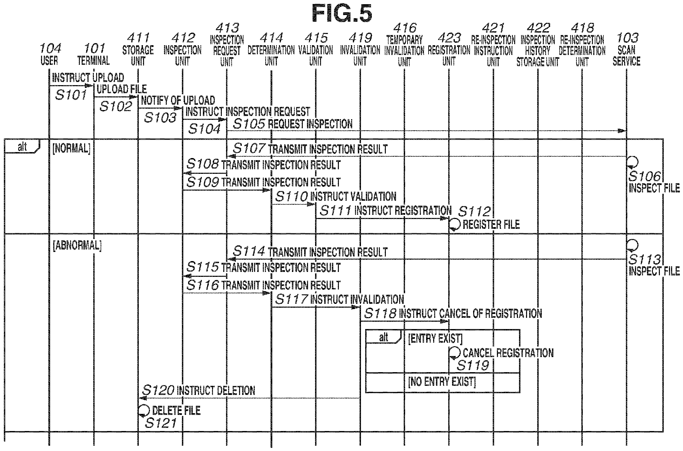

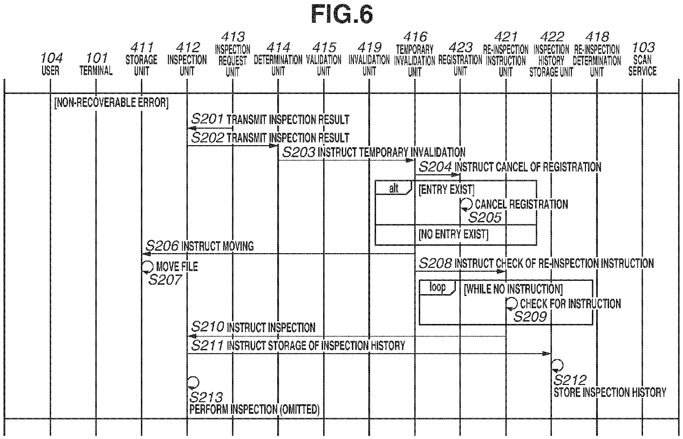

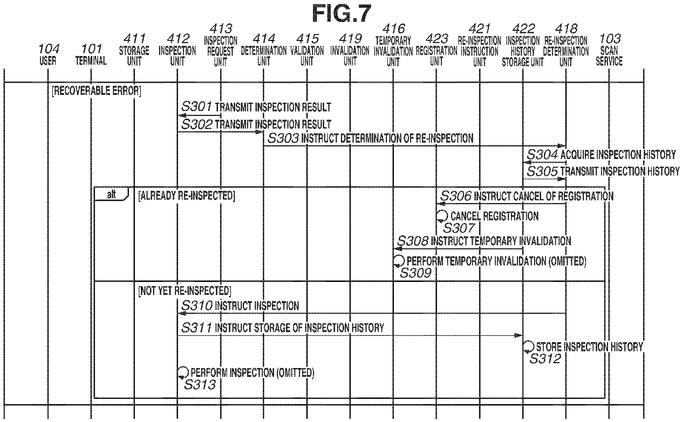

Next, a processing flow in the management system 100 will be described using sequence diagrams illustrated in Figs. 5 to 7.

In step S101, the terminal 101 receives a file upload instruction from the user 104. An upload instruction is issued by pressing an upload execution button displayed on the terminal, pressing a key on the keyboard, touching a touch panel, or voice input from a microphone. In addition, the upload instruction may be issued by an input from a controller or a smartphone connected to the terminal 101 by wire or wirelessly, pressing of a shutter button provided on the terminal 101, and an upload after a predetermined time has elapsed using a timer function. Any method other than the above may be used as long as it can issue an instruction.

In step S102, the terminal 101 transmits the file specified by the user 104 to the storage unit 411 based on the instruction from the user 104.

In step S103, the storage unit 411 stores the received file and notifies the inspection unit 412 that the file has been stored.

In step S104, upon receiving the notification from the storage unit 411, the inspection unit 412 instructs the inspection request unit 413 to generate an inspection request for the file.

In step S105, the inspection request unit 413 requests the inspection execution unit 431 to inspect the file.

In a case where it is determined that the file is normal as a result of the inspection, the processing from step S106 to step S112 is executed.

In step S106, the inspection execution unit 431 executes inspection on the requested file.

In step S107, the inspection execution unit 431 transmits an inspection result to the inspection request unit 413.

In step S108, the inspection request unit 413 transmits the received inspection result to the inspection unit 412.

In step S109, the inspection unit 412 generates, from the received inspection result, an inspection result in a format that can be received by the determination unit 414 and transmits the generated inspection result to the determination unit 414.

In step S110, the determination unit 414 instructs the validation unit 415 to validate the file subjected to the inspection. Specifically, validating the file refers to generating the summary information about the file and making the file accessible to the user 104 via the summary information.

In step S111, the validation unit 415 instructs the registration unit 423 to register attribute information of the file.

In step S112, the registration unit 423 registers the attribute information of the received file in a database.

In a case where it is determined that the file is abnormal as a result of the inspection, the processing from step S113 to step S121 is executed.

In step S113, the inspection execution unit 431 executes inspection on the requested file.

In step S114, the inspection execution unit 431 transmits the inspection result to the inspection request unit 413.

In step S115, the inspection request unit 413 transmits the received inspection result to the inspection unit 412.

In step S116, the inspection unit 412 transmits the inspection result to the determination unit 414.

In step S117, the determination unit 414 instructs the invalidation unit 419 to invalidate the file subjected to the inspection. Specifically, invalidating the file refers to making the file inaccessible to the user 104.

In step S118, the invalidation unit 419 instructs the registration unit 423 to cancel the registration of the file.

In step S119, if an entry for the file exists in the database, the registration unit 423 cancels the registration.

In step S120, the invalidation unit 419 instructs the storage unit 411 to delete the file.

In step S121, the storage unit 411 deletes the file.

In a case where it is determined as an error that cannot be expected to be recovered (i.e., unrecoverable error) as a result of the inspection, the processing from step S201 to step S214 is executed.

In step S201, the inspection request unit 413 transmits an error code indicating a deployment error or a license error, in other words, an error code indicating an unrecoverable error to the inspection unit 412 as the inspection result. A deployment error occurs in a case where the inspection request unit 413 is not operating. A license error occurs in a case where the user 104 does not have authority to use the inspection apparatus 103.

In step S202, the inspection unit 412 transmits the inspection result to the determination unit 414.

In step S203, the determination unit 414 instructs the temporary invalidation unit 416 to temporarily invalidate the file subjected to the inspection. Temporary invalidation processing is processing not for completely prohibiting the user 104 from accessing the file in the future but for giving the user 104 an opportunity to access the file if the file is re-inspected and determined as normal.

In step S204, the temporary invalidation unit 416 instructs the registration unit 423 to cancel the registration of the file.

In step S205, if the entry for the file exists in the database, the registration unit 423 cancels the registration. Accordingly, the summary information associated with the file is deleted and is no longer available to the user 104. In other words, the user 104 will not be able to access the file via the summary information.

In step S206, the temporary invalidation unit 416 instructs the storage unit 411 to move the file to the temporary information storage unit 417.

In step S207, the storage unit 411 moves the file to the temporary information storage unit 417.

In step S208, the temporary invalidation unit 416 instructs the re-inspection instruction unit 421 to check whether there is a re-inspection instruction from a system administrator of the management apparatus 102.

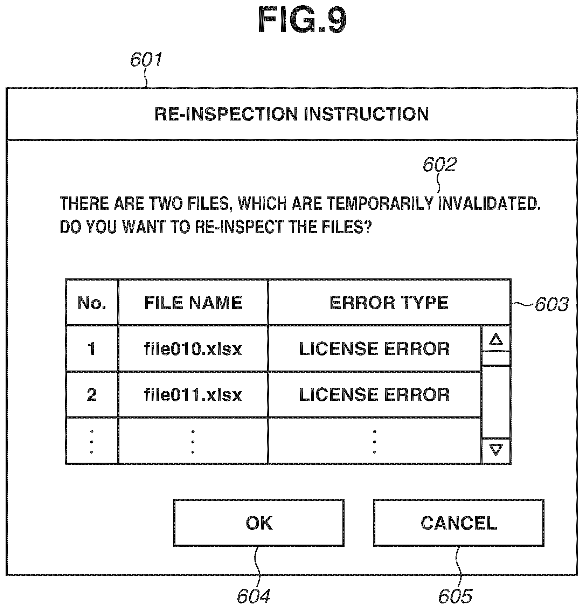

In step S209, the re-inspection instruction unit 421 checks whether there is the re-inspection instruction from the system administrator. A UI in the re-inspection instruction unit 421 will be described in detail below with reference to Fig. 9.

In step S210, the re-inspection instruction unit 421 instructs the inspection unit 412 to re-inspect the file.

In step S211, the inspection unit 412 instructs the inspection history storage unit 422 to store an inspection history.

In step S212, the inspection history storage unit 422 stores the inspection history. In step S213, the inspection unit 412 re-inspects the file. The processing in step S213 is to input the file to be re-inspected to the inspection unit 412. The processing corresponds to a firing of an event of a component for calling the inspection unit 412 and the inspection unit 412 being called with an identifier of the file to be inspected. In other words, the processing causes a similar action to that in step S103 to occur in the inspection unit 412. Processing after the file to be re-inspected is input to the inspection unit 412 is similar to that in step S104, so that the description thereof is omitted.

In a case where it is determined as an error that can be expected to be recovered (i.e., recoverable error) as a result of the inspection, the processing from step S301 to step S313 is executed.

In step S301, the inspection request unit 413 transmits an error code indicating a recoverable error as the inspection result to the inspection unit 412. Recoverable errors include, for example, a file acquisition error, an internal error, a timeout error, and a throttling error. A file acquisition error occurs in a case where the inspection execution unit 431 fails to acquire the file to be inspected due to disconnection of a communication path or deterioration of communication quality. An internal error occurs within the inspection request unit 413 or the inspection execution unit 431. In this case, the processing is terminated while processing an inspection request. A timeout error occurs in a case where the inspection request unit 413 cannot receive the inspection result within a predetermined time after instructing the inspection execution unit 431 to execute the inspection. In other words, the timeout error occurs if the inspection request processing requires time longer than the predetermined time and fails. A throttling error occurs in a case where a plurality of inspection requests occurs in a short period of time, and the inspection request unit 413 or the inspection execution unit 431 cannot perform scaling in time and execute a part of the inspection request. In other words, the throttling error occurs if the processing fails because parallelism of a computer resource used to process the inspection request is predetermined parallelism or more.

For example, if a large number of inspection requests are received in a short period of time in a case where a sufficient number of virtual computers that execute the processing of the inspection request unit 413 or the inspection execution unit 431 are not started, the virtual computers cannot start up in time and fail to process some of the inspection requests.

In step S302, the inspection unit 412 transmits the inspection result to the determination unit 414.

In step S303, the determination unit 414 instructs the re-inspection determination unit 418 to determine whether the file subjected to the inspection needs to be re-inspected.

In step S304, the re-inspection determination unit 418 instructs the inspection history storage unit 422 to transmit the inspection history of the file.

In step S305, the inspection history storage unit 422 transmits the inspection history of the file to the re-inspection determination unit 418.

In a case where it is determined that the file is already re-inspected from the inspection history, the processing from step S306 to step S309 is executed. In other words, in a case where the number of re-inspection times exceeds a predetermined number, it is determined that the re-inspection is not necessary and subsequent processing is invalidation.

In step S306, the re-inspection determination unit 418 instructs the registration unit 423 to cancel the registration of the entry corresponding to the file.

In step S307, the registration unit 423 cancels the entry corresponding to the file.

In step S308, the re-inspection determination unit 418 instructs the temporary invalidation unit 416 to temporarily invalidate the file.

In step S309, the temporary invalidation unit 416 executes temporary invalidation on the file. Processing is similar to that in step S203 in which the temporary invalidation unit 416 receives the temporary invalidation instruction from the determination unit 414, so that the description thereof is omitted.

In a case where it is determined that the file is not yet re-inspected from the inspection history, the processing from step S310 to step S313 is executed. In other words, in a case where the number of re-inspection times is the predetermined number or less, it is determined that the re-inspection is necessary and the subsequent processing is inspection.

In step S310, the re-inspection determination unit 418 instructs the inspection unit 412 to inspect the file.

In step S311, the inspection unit 412 instructs the inspection history storage unit 422 to store the inspection history.

In step S312, the inspection history storage unit 422 stores the inspection history.

In step S313, the inspection unit 412 inspects the file. Processing after the file to be inspected is input to the inspection unit 412 is similar to that in step S104, so that the description thereof is omitted.

According to the present embodiment, the inspection request unit 413 requests the inspection execution unit 431 to inspect the file, but the present invention is not limited to this. For example, the inspection request unit 413 may internally store virus patterns of a typical abnormal file and an abnormal file that frequently appears. Then, in a case where a received file matches the virus pattern, the inspection request unit 413 may generate an inspection result and transmit it to the inspection unit 412 without requesting the inspection apparatus 103 to inspect the file. This configuration can reduce a dependency relationship on the inspection apparatus 103, and thus frequency of occurrence of scanning errors can be reduced.

According to the present embodiment, the inspection unit 412 generates, from the received inspection result, an inspection result in a format that can be received by the determination unit 414, but the present invention is not limited to this. For example, in a case where a received inspection result is in a format that can be received by the determination unit 414, the inspection unit 412 may directly transmit the inspection result to the determination unit 414.

According to the present embodiment, the unrecoverable error is a deployment error or a license error, but it is not limited to these errors and may be only a license error.

Further, the recoverable error is, for example, a file acquisition error, an internal error, a timeout error, or a throttling error, but it is not limited to these errors. The recoverable error may include an excess or deficiency of arguments for calling the scanning service, mismatch of an argument (a value different from that in the specification is set), or an event that a setting file referenced by the scanning service cannot be read.

Further, the recoverable error may include an event that a log file for recording a processing history of the scanning service cannot be opened and an event that a file to be inspected is not properly specified. With this configuration, the present invention can be applied to the scanning service with the above-described error system.

According to the present embodiment, in a case of a license error, the system administrator is prompted to select whether to execute the re-inspection or not, but the present invention is not limited to this. A person involved in license management such as a legal department of the company that operates the management apparatus 102, may also be notified. In addition, a notification may be issued to check whether a license agreement period has expired. This configuration makes it possible to directly notify the person involved in the license management rather than contacting the person involved in the license management via the system administrator. Accordingly, it is possible to address a license issue more quickly and shorten a period during which a user cannot access a file.

According to the present embodiment, in a case of a deployment error, the system administrator is notified thereof, but a person in charge of deployment in a development division that operates the management apparatus 102 may be notified.

This configuration makes it possible to directly notify the person in charge of deployment rather than contacting the person in charge of deployment via the system administrator. Accordingly, it is possible to address a deployment issue more quickly and shorten a period during which a user cannot access a file.

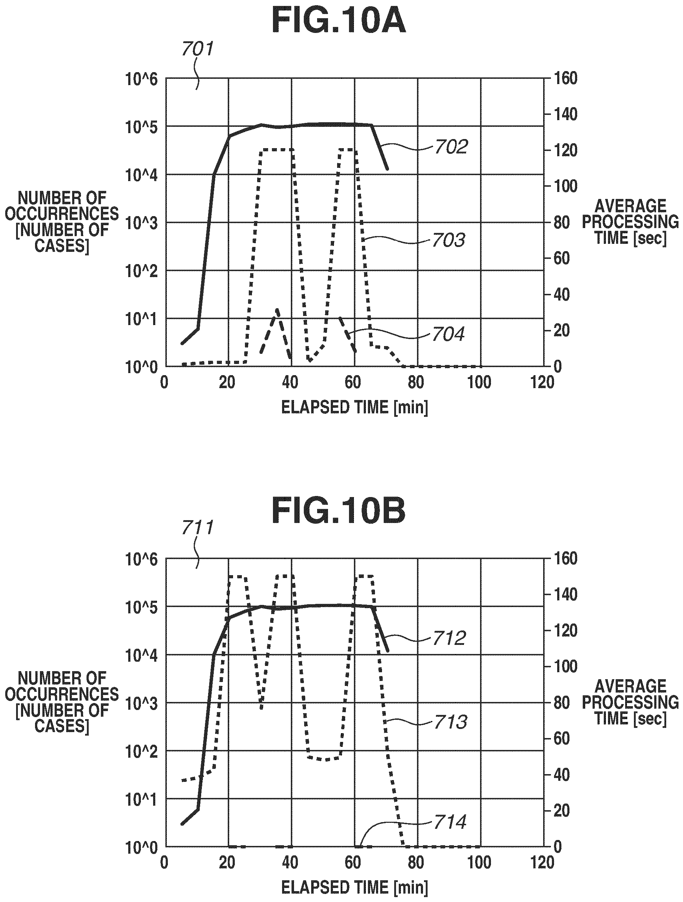

According to the present embodiment, in a case where a timeout error or a throttling error occurs, it is determined whether re-inspection is necessary, but processing for suppressing occurrence of both errors may be performed by detecting a sign of the occurrence of both errors. For example, a processing time of each computer resource per unit time of the inspection request unit 413 may be monitored, and in a case where a time difference between the processing times exceeds a predetermined value, the computer resource that processes the inspection request unit 413 may be scaled out. Accordingly, the occurrence of both errors can be suppressed. This is based on experimental results by inventors of the present invention. The present experimental results are described below with reference to Figs. 10A and 10B.

Alternatively, the processing time of each computer resource per unit time of the storage unit 411 is monitored, and in a case where a time differential value of the processing time exceeds a predetermined value, the computer resource that processes the inspection request unit 413 is scaled out. Accordingly, the occurrence of both errors can be suppressed.

According to the present embodiment, an example of scaling out is described to suppress the occurrence of errors in the inspection request unit 413, but the present invention is not limited to this. If a sign of an occurrence of an error is detected, a lightweight file may be input to the inspection request unit 413 to start the computer resource. This configuration can reduce a cold start of the computer resource, and as a result, the occurrence of errors can be reduced.

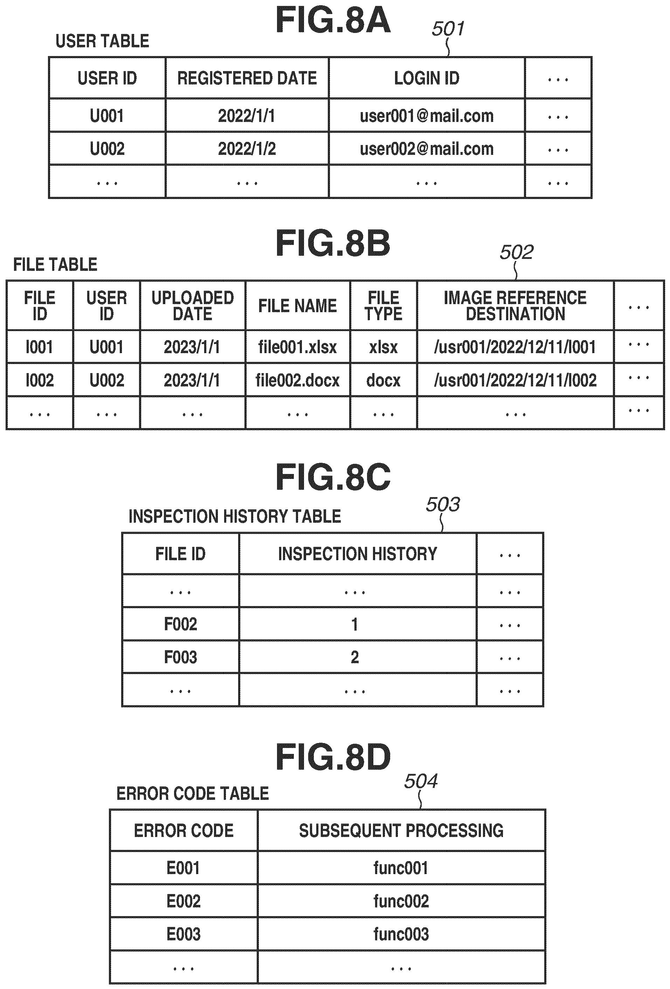

According to the present embodiment, the determination unit 414 determines the subsequent processing by branching the processing, but it is not limited to this. The determination unit 414 may determine the subsequent processing using a correspondence table in which the error code of the inspection result is associated with subsequent processing. An example of the correspondence table will be described below with reference to Fig. 8D. Using an error code table 504 in Fig. 8D can determine branching of processing with a smaller amount of calculation than that the processing is determined by branching.

### <Table Configuration>

Next, tables managed by the management apparatus 102 according to the present embodiment are described with reference to Figs. 8A to 8D.

A user table 501 is managed by the management apparatus 102.

A user identification (ID) for uniquely identifying a user, a registered date when the user completed user registration in the management apparatus 102, and a login ID for logging in are associated with each other and stored in the user table 501, so that the registered date and the login ID can be referenced using the user ID as a key.

A file table 502 is managed by the management apparatus 102.

A file ID for uniquely identifying a file, the user ID of the owner of the file, an uploaded date when the file is uploaded, a file name of the file, a file type of the file, and an image reference destination in the storage unit 411 are associated with each other and stored in the file table 502. Accordingly, the user ID, the uploaded date, the file name, the file type, and the image reference destination can be referenced using the file ID as a key.

An inspection history table 503 is managed by the management apparatus 102.

The file ID for uniquely identifying the file, an inspection history for storing the number of re-inspection times of the file, and the like are associated with each other and stored in the inspection history table 503, so that the inspection history can be referenced using the file ID as a key.

The error code table 504 is managed by the management apparatus 102.

An error code for uniquely identifying an error included in the inspection result is associated with an identifier of a function for executing subsequent processing corresponding to the error code, so that the identifier of the function for executing the subsequent processing can be referenced using the error code as a key.

### <UI Configuration>

Next, a management screen generated by the management apparatus 102 according to the present embodiment will be described with reference to Fig. 9.

A re-inspection instruction screen 601 is generated for the system administrator who manages the management apparatus 102. The re-inspection instruction screen 601 is displayed on the display apparatus connected to the management apparatus 102 or the information processing apparatus connected via the network 201.

A text area 602 displays the number of temporarily invalidated files and a message prompting a user to select whether to execute re-inspection or not.

A temporarily invalidated file list 603 displays a list of temporarily invalidated files together with an error type.

An OK button 604 is used to receive an instruction regarding execution of re-inspection from the user. When the OK button 604 is pressed, the management apparatus 102 advances the processing to step S210.

A cancel button 605 is used to receive an instruction regarding non-execution of re-inspection from the user. If the cancel button 605 is pressed, the management apparatus 102 terminates repetitive processing for acquiring the instruction, that is, waiting.

### <Load Test Result>

Next, experimental results of load tests by the inventors of the present invention will be described with reference to Figs. 10A and 10B.

A graph 701 illustrates the occurrence of errors in the inspection request unit 413 in a case where the management apparatus 102 was intensively loaded. Horizontal and vertical axes respectively represent time and the number of cases. 1000 users uploaded 1000 files at the same time.

Data 702 indicates transition of the number of files input to the inspection request unit 413.

Data 703 indicates transition of the processing time of each computer resource per unit time of the inspection request unit 413.

Data 704 indicates transition of the number of errors that occurred in the inspection request unit 413.

From the data 703 and 704, after the data 703 increased sharply, the data 704 started to take a value following it. In other words, as the processing time of each computer resource per unit time increases rapidly, errors begin to occur. This indicates that the occurrence of errors can be predicted using a rapid increase in the processing time of each computer resource per unit time as a sign.

Next, a graph 711 illustrates the occurrence of errors in the storage unit 411 in a case where the management apparatus 102 was intensively loaded. The horizontal and vertical axes respectively represent time and the number of cases. 1000 users uploaded 1000 files at the same time.

Data 712 indicates transition of the number of files input to the storage unit 411.

Data 713 indicates transition of the processing time of each computer resource per unit time of the storage unit 411.

Data 714 indicates transition of the number of errors that occurred in the storage unit 411.

From the data 713 and 714, after the data 713 increased sharply, the data 714 started to take a value following it. In other words, as the processing time of each computer resource per unit time increases rapidly, errors begin to occur. This indicates that the occurrence of errors can be predicted using a rapid increase in the processing time of each computer resource per unit time as a sign.

According to the technique described above, files are saved as much as possible according to inspection results, so that it is possible to suppress a user from being unable to access the file.

Specifically, if an inspection result is of a type that cannot be expected to be recovered over time, subsequent processing is determined to be temporary invalidation processing. Further, if the inspection result is of a type that can be expected to be recovered over time, subsequent processing is determined to be re-inspection determination processing. Thus, even in a case of a scanning error, a possibility that a file is determined to be a normal file can be increased.

### <Other Embodiment>

The embodiments are described in detail above, but the present invention can be implemented, for example, as a system, an apparatus, a method, a program, or a recording medium (storage medium). Specifically, the present invention may be applied to a system configured with a plurality of devices (for example, a host computer, an interface device, an imaging device, and a web application) or to an apparatus including a single device.

### Other Embodiments

Embodiment (s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

According to the present invention including the above-described configurations, even when a scanning error occurs, a possibility that a user can use a file can be increased.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. A management apparatus (102) that communicates with an inspection apparatus (103) configured to inspect whether input information input from a terminal (101) is abnormal information and manages the input information, the management apparatus (102) comprising:
inspection means for generating an inspection result for the input information;
determination means for,
in a case where the inspection result is a result of a type that cannot be expected to be recovered over time, determining that subsequent processing for the input information is temporary invalidation processing and,
in a case where the inspection result is a result of a type that can be expected to be recovered over time, determining that the subsequent processing for the input information is re-inspection determination processing;
temporary invalidation means for making the input information temporarily unavailable from outside the management apparatus based on determination by the determination means; and
re-inspection determination means for determining whether to re-inspect the input information based on the determination by the determination means.

2. The management apparatus (102) according to claim 1, wherein, in a case where the inspection result is an error that occurs if the management apparatus (102) does not have authority to use the inspection apparatus, the determination means determines that the subsequent processing for the input information is temporary invalidation.

3. The management apparatus (102) according to claim 1, further comprising inspection request means for requesting the inspection apparatus to inspect the input information,
wherein, in a case where the inspection result is an error that occurs if the inspection request means is not operating, the determination means determines that the subsequent processing for the input information is temporary invalidation.

4. The management apparatus (102) according to claim 1, further comprising inspection request means for requesting the inspection apparatus to inspect the input information,
wherein the determination means determines that the subsequent processing for the input information is re-inspection determination in a case where the inspection result is at least one of following errors including:
an error that occurs if the inspection request means cannot acquire the input information;
an error that occurs if the inspection request means terminates processing while processing a request;
an error that occurs if processing fails due to time taken for processing the request from the inspection request means being a predetermined time or longer; and
an error that occurs if processing fails due to parallelism of the inspection request means being predetermined parallelism or more.

5. The management apparatus (102) according to claim 1, further comprising storage means for storing summary information associated with the input information,
wherein the temporary invalidation means makes the summary information associated with the input information unavailable.

6. The management apparatus (102) according to claim 1,
wherein, in a case where a number of re-inspection times with respect to the input information is a predetermined times or less, the re-inspection determination means determines that re-inspection is necessary and determines that the subsequent processing is inspection, and
wherein, in a case where the number of re-inspection times with respect to the input information exceeds the predetermined times, the re-inspection determination means determines that re-inspection is not necessary and determines that the subsequent processing is invalidation.

7. The management apparatus (102) according to claim 1, further comprising re-inspection instruction means for receiving a re-inspection instruction from a system administrator,
wherein the re-inspection instruction means waits for processing until the re-inspection instruction is input and, in a case where the re-inspection instruction is input, performs re-inspection.

8. A method for communicating with an inspection apparatus (103) configured to inspect whether input information input from a terminal (101) is abnormal information and managing the input information, the method comprising:
generating an inspection result for the input information;
in a case where the inspection result is a result of a type that cannot be expected to be recovered over time, determining that subsequent processing for the input information is temporary invalidation processing;
in a case where the inspection result is a result of a type that can be expected to be recovered over time, determining that the subsequent processing for the input information is re-inspection determination processing;
making the input information temporarily unavailable from outside the management apparatus based on determination by the determining; and
determining whether to re-inspect the input information based on determination by the determining.

9. A program comprising instructions which, when the program is executed by a management apparatus (102), case the management apparatus (102) to carry out the method of claim 8.

10. A computer-readable data carrier having stored thereon the program of claim 9.
